# FASCICULE DE BREVET EUROPEEN

(11) **EP 0 974 130 B1**
(45) Date de publication et mention de la délivrance du brevet: **14.11.2001**
(21) Numéro de dépôt: 97953968.1
(22) Date de dépôt: 29.12.1997
(51) Int. Cl.: G07F 7/08, G06K 7/00

(54) **SYSTEME DE LECTURE DE DONNEES DANS UNE MEMOIRE D'UN COMPOSANT ELECTRONIQUE**
SYSTEM ZUM LESEN VON DATEN AUS EINEM SPEICHER EINES ELEKTRONISCHEN BAUTEILES
DATA READING SYSTEM IN AN ELECTRIC COMPONENT MEMORY

(30) Priorité: 27.12.1996 FR 9616242
(43) Date de publication de la demande: 26.01.2000
(73) Titulaire: SCHLUMBERGER Systèmes, 92120 Montrouge (FR)
(72) Inventeur: FRANCHI, Olivier, F-92370 Chaville (FR)
(86) Numéro de dépôt international: FR9702445
(87) Numéro de publication internationale: WO9829842

(56) Documents cités:
- EP-A- 0 168 836
- WO-A-94/23399
- FR-A- 2 619 463
- US-A- 4 797 543

## Description

La présente invention concerne un système de lecture d'au moins une donnée inscrite dans une mémoire d'un composant électronique, ainsi qu'un procédé de lecture d'une telle donnée au moins.

L'invention trouve une application particulièrement avantageuse dans le domaine des cartes à mémoire électronique, notamment les cartes dont la mémoire renferme des données relatives au résultat d'opérations transactionnelles, par exemple, effectuées an moyen desdites cartes, comme les unités restantes dans une télécarte ou encore le crédit disponible dans un porte-monnaie électronique.

Dune manière très générale, les composants électroniques des cartes à mémoire, sont prévus pour pouvoir communiquer et échanger des informations de type varié avec des terminaux auxquels ils sont connectés afin d'effectuer les opérations qui doivent être réalisées. En particulier, la procédure de mise en communication comporte une phase initiale au cours de laquelle le composant électronique reçoit du terminal un signal d'initialisation, puis émet à son tour en direction du terminal un message, dit de réponse d'initialisation, contenant des informations nécessaires au terminal pour établir le dialogue avec le composant.

Par ailleurs, on connaît des systèmes de lecture des données d'une carte à mémoire électronique qui sont essentiellement constitués d'un boîtier dans lequel la carte est introduite de manière à mettre en contact électrique le composant électronique avec un connecteur dont le boîtier est équipé. Ledit boîtier comporte également dans une mémoire morte un logiciel permettant d'établir un échange d'informations avec le composant électronique dans le but de lire les données dans la mémoire du composant et de les afficher sur des moyens de visualisation, tel qu'un écran à cristaux liquides.

Toutefois, ces systèmes de lecture connus présentent l'inconvénient que le logiciel utilisé doit être spécifiquement adapté à la carte dont on veut lire les données, avec pour conséquence qu'il est nécessaire de stocker dans la mémoire du boîtier autant de logiciels qu'il existe de types de cartes à traiter, ce qui se traduit par un encombrement relativement important du boîtier dû à la taille de la mémoire.

On connaît par ailleurs un document brevet publié sous le numéro WO-94/23399 décrivant un système de lecture dans lequel, pour la lecture de n DATA, il est nécessaire d'insérer la carte dans le lecteur n fois et de la retirer n-1 fois. Parallèlement à la lecture d'une donnée DATAn, un pointeur signifiant "DATAn lue" est écrit dans l'EEPROM de la carte. Les multiples retraits et réinsertions de la carte dans le lecteur constituent des manipulations fastidieuses à mettre en oeuvre. Les retraits intempestifs de la carte au moment de l'écriture de l'EEPROM sont susceptibles d'être à l'origine de défauts d'intégrité des données écrites dans les mémoires.

Aussi, un problème technique à résoudre par l'objet de la présente invention est de proposer un système de lecture d'au moins une donnée inscrite dans une mémoire d'un composant électronique ledit composant électronique étant apte à communiquer avec un terminal et, notamment, à émettre un message, dit de réponse d'initialisation, en réponse à un signal d'initialisation émis par ledit terminal, système de lecture qui serait unique quel que soit le type de carte à mémoire utilisé et qui permettrait donc de limiter les dimensions du boîtier de lecture.

La solution au problème technique posé consiste, selon la présente invention, en ce que ledit système de lecture comprend :
- dans le composant électronique, des moyens de recherche de la donnée dans la mémoire et d'inscription de ladite donnée dans une zone du message de réponse d'initialisation,
- un boîtier comportant :
   - des moyens d'émission dudit signal d'initialisation lorsque le composant électronique est connecté au boîtier,
   - des moyens de lecture de la donnée dans ladite zone du message de réponse d'initialisation.

La procédure d'initialisation des cartes à mémoire électronique, à savoir les formats du signal d'initialisation et du message de réponse d'initialisation, étant standardisée selon la norme ISO 7816-3, on comprend que le système de lecture de données conforme à l'invention présente un caractère universel et puisse être utilisé pour toutes les cartes existantes. Il en résulte une simplification considérable du système par rapport à ceux connus de l'état de la technique, d'où la possibilité de réduire l'encombrement du boîtier.

Il y a avantage, conformément à l'invention, à ce que ledit boîtier comporte des moyens d'affichage de ladite donnée, après lecture, ceci afin de permettre à l'utilisateur d'avoir un accès visuel à la valeur de la donnée lue par le système conforme à l'invention.

De manière à pouvoir lire une pluralité de données inscrites dans la mémoire du même composant électronique, l'invention prévoit que ledit boîtier est muni d'un moyen d'initialisation forcée, destiné à actionner à volonté lesdits moyens d'émission du signal d'initialisation, de sorte que, les données inscrites dans la mémoire étant numérotées de 1 à N, la donnée de rang 1 est lue dès que le composant électronique est connecté au boîtier, les données étant ensuite lues cycliquement en séquence à chaque actionnement dudit moyen d'initialisation forcée.

De manière avantageuse, le système de lecture de l'invention comporte un composant électronique comprenant en outre une mémoire volatile dans laquelle est écrite une donnée signifiant que de la donnée DATAi a été lue ou que la donnée DATA1+1 est à lire et des moyens pour que l'alimentation du composant électronique soit conservée lors de la lecture cyclique en séquence des données DATA2, ..., DATAN.

Par ailleurs, l'invention a pour objet un procédé de lecture d'au moins une donnée inscrite dans une mémoire d'un composant électronique, ledit composant électronique étant apte à communiquer avec un terminal et, notamment, à émettre un message, dit de réponse d'initialisation, en réponse à un signal d'initialisation émis par ledit terminal, caractérisé en ce qu'il comprend les étapes suivantes selon lesquelles :
le composant électronique est connecté à un boîtier ;
le boîtier, émet un signal d'initialisation ;
le composant électronique recherche la donnée dans la mémoire et inscrit ladite donnée dans une zone de message de réponse d'initialisation ; et
la donnée est lue dans ladite zone du message de réponse d'initialisation.

De manière avantageuse, le procédé de lecture selon l'invention comporte en outre l'étape suivante, selon laquelle :
des moyens d'initialisation forcée actionnent les moyens d'émission du signal (SI) d'initialisation, de sorte que les données DATA1, ..., DATAN inscrites dans la mémoire étant numérotées de 1 à N, la donnée DATA1 de rang 1 est lue dès que le composant électronique est connecté au boîtier, les données DATA2, ..., DATAN étant ensuite lues cycliquement en séquence à chaque actionnement dudit moyen d'initialisation forcée. Lorsqu'une donnée DATAi est lue, une mémoire volatile du composant est écrite de manière à comporter une donnée signifiant que de la donnée DATAi a été lue ou que la donnée DATAi+1 est à lire. Pour la lecture d'une donnée DATAi, on vérifie l'état de la mémoire volatile. L'alimentation du composant électronique est conservée au cours de la lecture cyclique des données DATAi.

La description qui va suivre en regard des dessins annexés, donnés à titre d'exemples non limitatifs, fera bien comprendre en quoi consiste l'invention et comment elle peut être réalisée.

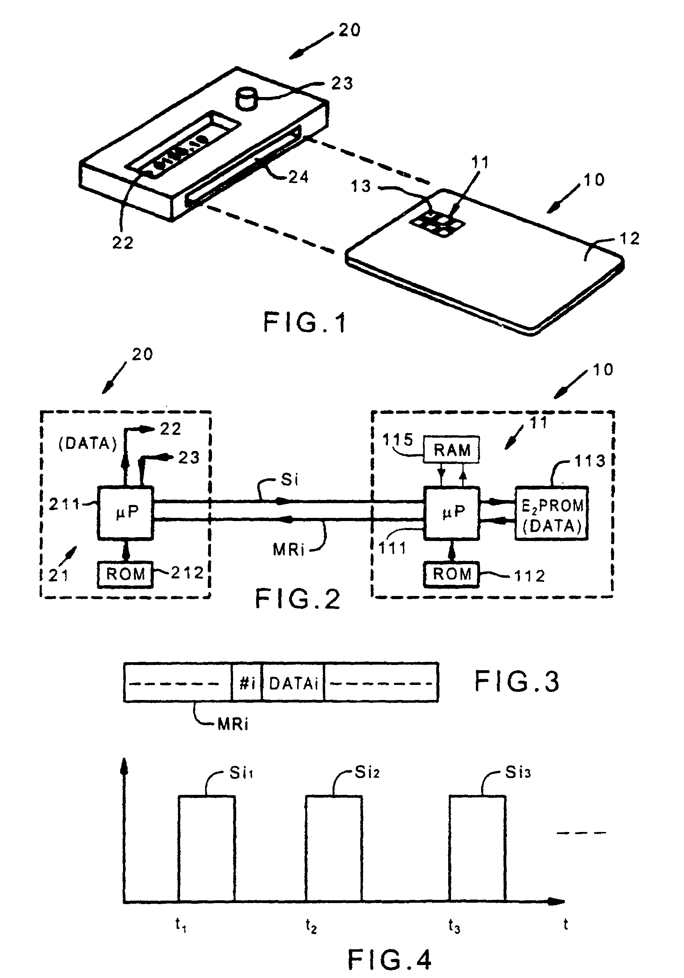

La figure 1 est une vue en perspective d'un système de lecture de données conforme à l'invention, comprenant une carte à mémoire électronique et un boîtier.

Le figure 2 est un schéma du circuit électronique du système de lecture de la figure 1.

La figure 3 est un schéma montrant la constitution d'un message de réponse d'initialisation.

La figure 4 est un chronogramme montrant une séquence de signaux d'initialisation.

La figure 5 est un schéma montrant l'organisation de la mémoire réinscriptible du composant électronique de la figure 2.

La figure 6 est un schéma montrant les différentes étapes de mise en oeuvre de l'invention.

Sur la figure 1 est représentée en perspective une carte 10 à mémoire électronique, du type carte ISO pour effectuer des transactions électroniques, comprenant un composant électronique 11 inséré dans un corps 12 de carte en matière plastique. De manière classique, le composant électronique 11 est muni de contacts électriques, désignés globalement par la référence 13, destinés à réaliser la liaison électrique avec un connecteur disposé dans un terminal de transaction électronique.

Comme le montre la figure 2, le composant électronique 11 comporte, outre les contacts électriques 13, un microprocesseur 111, et sa mémoire morte 112 associée, une mémoire volatile RAM 115 ainsi qu'une mémoire 113 réinscriptible, du type E₂PROM, dans laquelle est inscrite au moins une donnée DATA, représentative par exemple du résultat d'une transaction électronique.

Dans le but de permettre au propriétaire d'une carte à mémoire électronique d'avoir accès à tout moment et facilement à certaines données contenues dans la mémoire 113 du composant électronique 11, telles que le solde disponible dans un porte-monnaie électronique, l'invention propose un boîtier 20 qui, comme l'indique la figure 1, est apte à recevoir la carte 10 à mémoire électronique à travers une fente 24 prévue à cet effet, et à entrer en communication avec le composant électronique 11 au moyen d'un connecteur, non représenté, coopérant avec les contacts électriques 13.

La figure 2 montre que le boîtier 20 comporte un circuit électronique 21 constitué par un microprocesseur 211 et sa mémoire morte 212 associée, l'ensemble étant configuré de manière à former des moyens d'émission d'un signal SI d'initialisation lorsque le composant électronique 11 est connecté au boîtier 20, exactement comme n'importe quel terminal.

Lorsque la carte n'est pas alimentée en énergie, c'est-à-dire que la tension d'alimentation est nulle (Vcc OFF), la RAM 115 de la carte, constituée par un espace mémoire de, par exemple, trois octets, est dans un état non défini. Lorsque la carte est introduite dans la fente 24 du boîtier 20, que le composant 11 est connecté au connecteur du lecteur, ledit composant est alimenté en énergie et la tension d'alimentation est dite Vcc ON. Les échanges d'information entre le composant électronique 11 et un terminal débutent par une procédure d'initialisation répondant à la norme ISO 7816-3 mentionnée plus haut. Au cours de cette procédure, le microprocesseur 111 de la carte vérifie l'état défini ou non défini de la RAM 115. Dans le cas ou la RAM 115 est dans un état non défini, le terminal envoie un signal SI1 d'initialisation ("reset" en anglo-saxon) à destination du composant. En retour, le composant électronique émet vers le terminal un message MRI1 de réponse d'initialisation ("Answer to reset" (ATR) en anglo-saxon). Dans le message, figurent des informations indispensables à la communication entre le terminal et le composant. D'autres informations, comme les caractères historiques, sont facultatives car elles ne concernent par exemple que le nom du fabricant de la carte, le composant électronique inséré dans la carte, la mémoire morte ROM, etc.

Le protocole d'initialisation se poursuit donc par l'envoi par le composant électronique 11 d'un message MRI1 de réponse d'initialisation élaboré par le microprocesseur 111 du composant de manière à inscrire dans une zone dudit message la valeur de la donnée DATA1 qui doit être lue par le boîtier 20. Cette zone peut, par exemple, être celle prévue pour les caractères historiques cités plus haut.

Parallèlement à l'envoi du message MR1, le microprocesseur 111 de la carte écrit, dans la mémoire RAM 115, une donnée signifiant que la donnée DATA1 a été lue ou que la donnée DATA2 devra être lue. La RAM 115 passe alors d'un état non défini a un état défini, de par une donnée représentative de la donnée lue ou à lire.

Bien entendu, et comme le montre la figure 3, lorsqu'une pluralité de N données doit être lue, chaque donnée DATAi (i = 1, ..., N) est repérée dans le message MRIi par le numéro i de son rang.

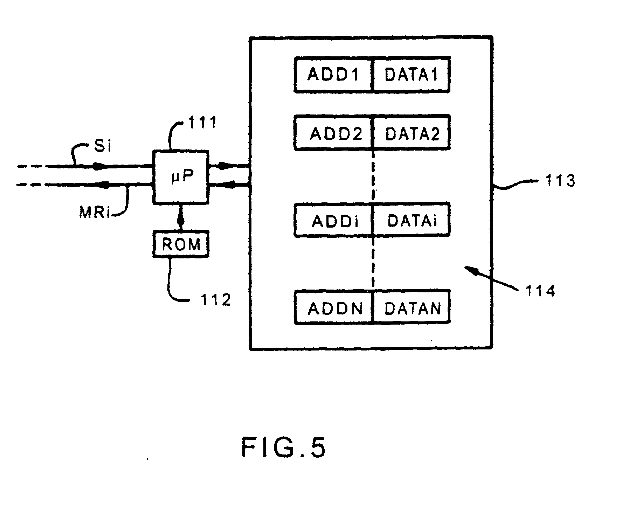

Le mécanisme de recherche de la donnée à lire et son inscription dans le message de réponse d'initialisation est conduit par le microprocesseur 111 dans la mémoire réinscriptible 113, au moyen d'un fichier 114, représenté sur la figure 5, indiquant pour chaque donnée DATAi définie par son rang i le chemin d'accès à ladite donnée dans la mémoire 113.

Comme on peut le voir sur la figure 2, le microprocesseur 211 du circuit électronique 21 du boîtier reçoit le message MRi de réponse d'initialisation provenant du composant électronique 11 de la carte 10 et lit la donnée DATA dans la zone du message où elle a été inscrite afin de la transmettre pour visualisation à des moyens 22 d'affichage du boîtier 20, tels qu'un afficheur à cristaux liquides.

Dans le cas d'une pluralité de N données à lire et à afficher, il est prévu, conformément à la figure 1, que le boîtier 20 est muni d'un moyen 23 d'initialisation forcée, un bouton-poussoir par exemple, destiné à obtenir à volonté l'émission du signal SI d'initialisation par le microprocesseur 211, de sorte que la donnée DATA1 de rang 1 est lue dès que le composant électronique 11 est connecté au boîtier 20, les données suivantes DATA2, ..., DATAN étant ensuite lues cycliquement en séquence à chaque actionnement dudit moyen 23 d'initialisation forcée.

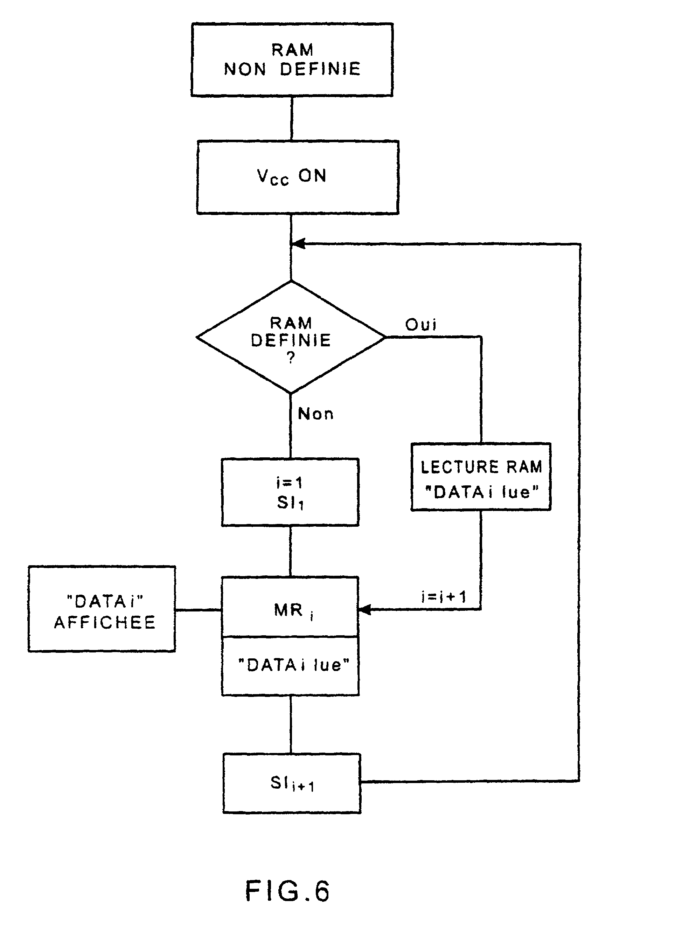

Le fonctionnement du système de lecture, objet de l'invention, peut être résumé de la façon suivante, au regard des figures 4 et 6.

Si à l'instant t1 l'utilisateur du système décide de lire les informations contenues dans sa carte 10 à mémoire électronique, il introduit la carte dans le boîtier 20 produisant ainsi l'émission automatique d'un premier signal SI1 d'initialisation et celle, en retour, du message MRI1 de réponse d'initialisation contenant toutes les données DATAi. A cette première mise en fonctionnement, le microprocesseur 211 lit la première donnée DATA1 et l'affiche sur l'écran 22. Si l'utilisateur veut à l'instant t2 connaître la valeur de la deuxième donnée DATA2, il ne retire pas la carte de la fente 24 du lecteur. La tension d'alimentation Vcc n'est pas coupée (Vcc ON). L'utilisateur appuie sur le bouton-poussoir 23 qui déclenche l'émission forcée d'un deuxième signal SI2 d'initialisation. Suite à ce deuxième signal SI2 d'initialisation, le microprocesseur 111 de la carte vérifie l'état défini ou non de la mémoire RAM 115. Etant donné que la RAM 115 a été écrite concomitamment à la transmission du message MRI1, cette mémoire RAM est dans un état défini. Son contenu signifiant "DATA1 lue" ou "DATA2 à lire" est lu et le microprocesseur 111 de la carte va chercher, dans le fichier 114, l'adresse de la DATA2. Un message MRI2 est alors envoyé au lecteur, mais cette fois-ci le microprocesseur 211 ira lire la deuxième donnée DATA2 et l'affichera. Bien entendu, si la donnée à lire est unique, celle-ci sera affichée à chaque actionnement du bouton-poussoir 23.

Le processus se poursuit de la même manière si à l'instant t3 l'utilisateur veut lire la troisième donnée DATA3.

Au N-1^{ème} actionnement du bouton-poussoir 23, la dernière variable DATAN s'affichera, avec retour à la première donnée DATA1 au N^{ème} actionnement, et ainsi de suite.

Le système est remis à zéro à chaque fois que la carte 10 est déconnectée du boîtier 20, la première donnée à être affichée étant toujours la donnée de rang 1 DATA1.

Cette remise à zéro est due au fait, qu'en coupant l'alimentation, la mémoire RAM 115 revient dans un état non défini.

## Revendications

1. Système de lecture d'au moins une donnée inscrite dans une mémoire (113) d'un composant électronique (11), ledit composant électronique étant apte à communiquer avec un terminal et, notamment, à émettre un message (MRI), dit de réponse d'initialisation, en réponse à un signal (SI) d'initialisation émis par ledit terminal, ledit système de lecture comprenant :
- dans le composant électronique (11), des moyens (111, 114) de recherche de la donnée (DATA) dans la mémoire (113) et d'inscription de ladite donnée dans une zone de message (MRI) de réponse d'initialisation,
- un boîtier (20) comportant
• des moyens (211) d'émission dudit signal (SI) d'initialisation lorsque le composant électronique (11) est connecté au boîtier (20),
• des moyens (211) de lecture de la donnée (DATA) dans ladite zone du message (MRI) de réponse d'initialisation,
ledit système de lecture étant **caractérisé en ce que** ledit boîtier (20) est muni d'un moyen (23) d'initialisation forcée, destiné à actionner lesdits moyens (211) d'émission du signal (SI) d'initialisation, de sorte que, les données (DATA1, ..., DATAN) inscrites dans la mémoire (113) étant numérotées de 1 à N, la donnée (DATAI) de rang 1 est lue dès que le composant électronique (11) est connecté au boîtier (20), les données (DATA2, ..., DATAN) étant ensuite lues en séquence à chaque actionnement dudit moyen (23) d'initialisation forcée.

2. Système de lecture selon la revendication 1, **caractérisé en ce que** le moyen (23) d'initialisation forcée est destiné à actionner à volonté les moyens (211) du signal (SI) d'initialisation et **en ce que** les données (DATA2, ..., DATAN) sont lues cycliquement.

3. Système de lecture selon l'une des revendications 1 ou 2, **caractérisé en ce que** ledit boîtier (20) comporte des moyens (22) d'affichage de ladite donnée (DATA), après lecture.

4. Système de lecture selon l'une des revendications 1, 2 ou 3, **caractérisé en ce que** lesdits moyens de recherche comprennent, dans la mémoire (113) du composant électronique (11), un fichier (114) indiquant pour chaque donnée (DATAi) définie par son rang (i) le chemin d'accès à ladite donnée dans la mémoire (113).

5. Système de lecture selon l'une des revendications précédentes, **caractérisé en ce que** le composant électronique comprend en outre une mémoire volatile dans laquelle est écrite une donnée signifiant que de la donnée (DATAi) a été lue ou que la donnée (DATAi+1) est à lire.

6. Système de lecture selon l'une des revendications 2 à 5, **caractérisé en ce qu'**il comporte des moyens pour que l'alimentation du composant électronique soit conservée lors de la lecture cyclique en séquence des données (DATA2, ..., DATAN).

7. Procédé de lecture d'au moins une donnée inscrite dans une mémoire (113) d'un composant électronique (11), ledit composant électronique étant apte à communiquer avec un terminal et, notamment, à émettre un message (MRI), dit de réponse d'initialisation, en réponse à un signal (SI) d'initialisation émis par ledit terminal, **caractérisé en ce qu'**il comprend les étapes suivantes selon lesquelles :
- le composant électronique (11) est connecté à un boîtier (20) ;
- le boîtier (20), émet un signal (SI) d'initialisation ;
- le composant électronique (11) recherche la donnée (DATA) dans la mémoire (113) et inscrit ladite donnée dans une zone de message (MRI) de réponse d'initialisation ;
- la donnée (DATA) est lue dans ladite zone du message (MRI) de réponse d'initialisation ; et
- des moyens (23) d'initialisation forcée actionnent les moyens (211) d'émission du signal (SI) d'initialisation, de sorte que les données (DATA1, ..., DATAN) inscrites dans la mémoire (113) étant numérotées de 1 à N, la donnée (DATAI) de rang 1 est lue dès que le composant électronique (11) est connecté au boitier(20), les données (DATA2, ..., DATAN) étant ensuite lues en séquence à chaque actionnement dudit moyen (23) d'initialisation forcée.

8. Procédé de lecture selon la revendication 7, **caractérisé en ce que** les données (DATA2, ..., DATAN) sont ensuite lues cycliquement en séquence.

9. Procédé de lecture selon l'une des revendications 7 ou 8, **caractérisé en ce que**, lorsqu'une donnée (DATAi) est lue, une mémoire volatile (RAM) du composant est écrite de manière à comporter une donnée signifiant que de la donnée (DATAi) a été lue ou que la donnée (DATAi+1) est à lire.

10. Procédé de lecture selon l'une des revendications 7, 8 ou 9, **caractérisé en ce que**, pour la lecture d'une donnée (DATAi), on vérifie l'état de la mémoire volatile (RAM).

11. Procédé de lecture selon l'une des revendications 7 à 10, **caractérisé en ce que** l'alimentation du composant électronique est conservée au cours de la lecture cyclique des données (DATAi).

## Claims

1. A system for reading at least one data item written within a memory (113) of an electronic component (11), said electronic component being adapted to communicate with a terminal and, in particular, to transmit a so-called initialization response message (IRM) in response to an initialization signal (IS) transmitted by said terminal, wherein the reading system comprises:
- in the electronic component (11), means (111, 114) for seeking data (DATA) within the memory (113) and for writing said data within an initialization response message (IRM) area,
- a housing (20) including:
• means (211) for transmitting said initialization signal (IS) when the electronic component (11) is connected to the housing (20),
• means (211) for reading the data (DATA) from said initialization response message (IRM) area,
wherein said reading system is **characterized in that** said housing (20) is provided with forced initialization means (23), for activating said initialization signal (IS) transmission means (211), so that, with the data (DATA1, ..., DATAN) written in memory (113) being numbered form 1 to N, data item (DATA1) of order 1 is read as soon as the electronic component (11) is connected to the housing (20), the other data (DATA2, ..., DATAN) then being read on each activation of said forced initialization means (23) in sequence.

2. A reading system according to claim 1, **characterized in that** the forced initialization means (23) is for activating the initialization signal (IS) reading means when needed and **in that** the data (DATA2, ..., DATAN) is read cyclically.

3. A reading system according to any of claims 1 and 2, **characterized in that** said housing (20) includes means (22) for displaying said data (DATA), after reading.

4. A reading system according to any of claims 1, 2 and 3, **characterized in that** said seeking means comprise, within the memory (113) of the electronic component (11), a file (114) indicating, for each data item (DATAi) defined by its order (i), the access path to said data item within the memory (113).

5. A reading system according to any of the previous claims, **characterized in that** the electronic component further comprises a volatile memory within which a data item is written, which means that data item (DATAi) has been read or that data item (DATAi+1) is to be read.

6. A reading system according to any of claims 2 to 5, **characterized in that** it comprises means for maintaining the power supply to the electronic component when cyclically reading data (DATA2, ..., DATAN) in sequence.

7. A method for reading at least one data item written within a memory (113) of an electronic component (11), in said electronic component being adapted to communicate with a terminal, and, in particular, to transmit a so-called initialization response message (IRM), in response to an initialization signal (IS) transmitted by said terminal, **characterized in that** it comprises steps according to which:
- the electronic component (11) is connected to the housing (20);
- the housing (20) transmits an initialization signal (IS);
- the electronic component (11) seeks the data item (DATA) within the memory (113) and writes said data item within an initialization response message (IRM) area;
- the data item (DATA) is read from said initialization response message (IRM) area; and
- forced initialization means (23) activate initialization signal (IS) transmission means (211) so that, with data (DATA1, ..., DATAN) written in the memory (113) being numbered from 1 to N, the data item (DATA1) of order 1 is read as soon as the electronic component (11) is connected to the housing (20), the other data (DATA2, ..., DATAN) then being read on each activation of said forced initialization means (23) in sequence.

8. A reading method according to claim 7, **characterized in that** the data (DATA2, DATAN) are then cyclically read in sequence.

9. A reading method according to any of claims 1 or 8, **characterized in that**, when a data item (DATAi) is read, a volatile memory (RAM) in the component is written so as to contain a data item meaning that data item (DATAi) has been read or that data item (DATAi+1) is to be read.

10. A reading method according to any of claims 7, 8 or 9, **characterized in that**, for reading a data item (DATAi), the status of the volatile memory (RAM) is checked.

11. A reading method according to any of claims 7 to 10, **characterized in that** the power supply to the electronic component is maintained during the cyclical reading of data (DATAi).

## Patentansprüche

1. Lesesystem wenigstens eines der in einem Speicher (113) einer elektronischen Komponente (11) eingeschriebenen Daten, wobei besagte elektronische Komponente geeignet ist, mit einem Terminal zu kommunizieren und insbesondere eine sogenannte Initialisierungsmeldung (MRI) als Antwort auf ein von besagtem Terminal ausgegebenes Initialisierungssignal (SI) auszugeben, wobei besagtes System umfaßt:
- in der elektronischen Komponente (11) Suchmittel (111, 114) der Daten (DATA) im Speicher (113) und Einschreibemittel der besagten Daten in einer Meldezone (MRI) der Initialisierungsantwort.
- ein Gehäuse (20), umfassend:
• Sendemittel (211) besagten Initialisierungssignals (SI), wenn die elektronische Komponente (11) an das Gehäuse (20) angeschlossen ist,
• Lesemittel (211) der Daten (DATA) in besagter Meldezone (MRI) der Initialisierungsantwort,
wobei besagtes Lesesystem **dadurch gekennzeichnet ist, daß** besagtes Gehäuse (20) mit einem Mittel (23) zur Zwangsinitialisierung ausgestattet ist, das dazu bestimmt ist, besagte Sendemittel (211) des Initialisierungssignals (SI) zu betätigen, derart, daß, da die im Speicher (113) eingeschriebenen Daten (DATA1, ..., DATAN) von 1 bis N numeriert sind, die Daten (DATA1) des Ranges 1 gelesen werden, sobald die elektronische Komponente (11) an das Gehäuse (20) angeschlossen ist, wobei die Daten (DATA2, ..., DATAN) anschließend in Sequenz bei jeder Betätigung besagten Mittels (23) zur Zwangsinitialisierung gelesen werden.

2. Lesesystem gemäß Anspruch 1, **dadurch gekennzeichnet, daß** das Mittel (23) zur Zwangsinitialisierung zur beliebigen Betätigung der Mittel (211) des Initialisierungssignals (SI) bestimmt ist und daß die Daten (DATA2, ..., DATAN) zyklisch gelesen werden.

3. Lesesystem gemäß Anspruch 1 oder 2, **dadurch gekennzeichnet, daß** besagtes Gehäuse (20) Anzeigemittel (22) besagter Daten (DATA) nach dem Lesen umfaßt.

4. Lesesystem gemäß Anspruch 1, 2 oder 3, **dadurch gekennzeichnet, daß** besagte Suchmittel im Speicher (113) der elektronischen Komponente (11) eine Datei (114) umfassen, die für jede der nach seinem Rang (i) definierten Daten (DATAi) den Zugangspfad zu besagten Daten im Speicher (113) anzeigen.

5. Lesesystem gemäß einem der vorgenannten Ansprüche, **dadurch gekennzeichnet, daß** die elektronische Komponente darüber hinaus einen flüchtigen Speicher umfaßt, in dem eine der Daten eingeschrieben ist, die bedeutet, daß die Daten (DATAi) gelesen wurden oder daß die Daten (DATA+1) zu lesen sind.

6. Lesesystem gemäß Anspruch 2 bis 5, **dadurch gekennzeichnet, daß** es Mittel umfaßt, damit die Versorgung der elektronischen Komponente beim zyklischen Lesen in Sequenz der Daten (DATA2, ..., DATAN) beibehalten wird.

7. Leseverfahren wenigstens einer der in einen Speicher (113) einer elektronischen Komponente (11) eingeschriebenen Daten, wobei besagte elektronische Komponente geeignet ist, mit einem Terminal zu kommunizieren und insbesondere eine sogenannte Initialisierungsantwortmeldung (MRI) als Antwort auf eine Initialisierungssignal (SI) auszugeben, das von besagtem Terminal ausgegeben wurde, **dadurch gekennzeichnet, daß** es die nachfolgenden Stufen umfaßt, gemäß derer:
- die elektronische Komponente (11) an ein Gehäuse (20) angeschlossen wird;
- das Gehäuse (20) ein Initialisierungssignal (SI) ausgibt;
- die elektronische Komponente (11) die Daten (DATA) im Speicher (113) sucht und besagte Daten in einer Meldezone (MRI) zur Initialisierungsantwort einschreibt;
- die Daten (DATA) in besagter Meldezone (MRI) der Initialisierungsantwort gelesen werden; und
Mittel (23) zur Zwangsinitialisierung die Sendemittel (211) des Initialisierungssignals (SI) derart betätigen, daß, da die im Speicher (113) eingeschriebenen Daten (DATA1, ..., DATAN) von 1 bis N numeriert sind, die Daten (DATA1) des Ranges 1 gelesen werden, sobald die elektronische Komponente (11) an das Gehäuse (20) angeschlossen ist, wobei die Daten (DATA2, ..., DATAN) anschließend in Sequenz bei jeder Betätigung besagten Mittels (23) zur Zwangsinitialisierung gelesen werden.

8. Leseverfahren gemäß Anspruch 7, **dadurch gekennzeichnet, daß** die Daten (DATA2, ..., DATAN) anschließend zyklisch in Sequenz gelesen werden.

9. Leseverfahren gemäß Anspruch 7 oder 8, **dadurch gekennzeichnet, daß**, wenn eines der Daten (DATAi) gelesen wird, ein flüchtiger Speicher (RAM) der Komponente derart geschrieben wird, daß er eines der Daten umfaßt, was bedeutet, daß die Daten (DATAi) gelesen wurden oder daß die Daten (DATA+1) zu lesen sind.

10. Leseverfahren gemäß Anspruch 7, 8 oder 9, **dadurch gekennzeichnet, daß** man für das Lesen eines der Daten (DATAi) den Zustand des flüchtigen Speichers (RAM) überprüft.

11. Leseverfahren gemäß Anspruch 7 bis 10, **dadurch gekennzeichnet, daß** die Versorgung der elektronischen Komponente im Lauf des zyklischen Lesens der Daten (DATAi) beibehalten wird.
